# EUROPÄISCHE PATENTANMELDUNG

(11) **EP 2 301 977 A1**
(43) Veröffentlichungstag der Anmeldung: **30.03.2011**
(21) Anmeldenummer: 09171362.8
(22) Anmeldetag: 25.09.2009
(51) Int. Cl.: C08F 220/18, C08F 220/28, C08F 220/60, C09D 133/14

(54) **Wasserdispergierbares, cyclocarbonatfunktionalisiertes vinylcopolymer-system**

(71) Anmelder: Construction Research & Technology GmbH, 83308 Trostberg (DE)
(72) Erfinder: Mecfel, Joanna, 83352, Altenmarkt an der Alzt (DE); Walther, Burkhard, 84518, Garching (DE); Mezger, Jochen, 84518, Garching an der Alz (DE); Staudhamer, Rosita, 83547, Babensham (DE)
(74) Vertreter: Bieller, Vera

(57) **Zusammenfassung**

Vorgeschlagen wird ein wasserdispergierbares, cyclocarbonatfunktionalisiertes Vinylcopolymer-Bindemittel, ein Verfahren zur Herstellung des Bindemittels, eine wässrige Dispersion enthaltend das Bindemittel, ein System umfassend das Bindemittel, Wasser und einen (Amin-)Härter sowie die Verwendung des Bindemittels zur Herstellung einer gehärteten Beschichtung.

Es wurde überraschend gefunden, dass dieses Bindemittel, bei dem die erfindungsgemäßen Emulgatorgruppen in die Polymerkette eingebaut sind, stabile wässrige Dispersionen mit einem Feststoffanteil von bis zu ≥ 30 Gew.-% ergibt.

## Beschreibung

Die vorliegende Erfindung betrifft ein wasserdispergierbares, cyclocarbonatfunktionalisiertes Vinylcopolymer-Bindemittel, ein Verfahren zur Herstellung des Bindemittels, eine wässrige Dispersion enthaltend das Bindemittel, ein System umfassend das Bindemittel, Wasser und einen Härter sowie die Verwendung des Bindemittels zur Herstellung einer gehärteten Beschichtung.

Zweikomponentensysteme auf Basis von Polyisocyanaten gehören zum Stand der Technik. Diese werden beispielsweise als Klebstoffe, Dichtstoffe, Vergussmassen, als Korrosionsschutz und für Beschichtungen verwendet. Vorteilhaft sind die hohe Säure-, Laugen- und Chemikalienbeständigkeit der so erhaltenen gehärteten Zusammensetzungen. Allerdings sind NCO -Gruppen gegen Feuchtigkeit empfindlich. Daher ist die Herstellung lagerstabiler, wasserbasierter Systeme auf der Basis von Isocyanaten nicht möglich. Des Weiteren sind monomere und niedermolekulare lsocyanatverbindungen toxikologisch bedenklich, insbesondere wenn diese leichtflüchtig sind oder migrieren.

Polyurethane können auch ausgehend von cyclischen Carbonatverbindungen erhalten werden. Es ist bekannt, dass die Polymerisation von Vinylverbindungen, die cyclische Carbonatgruppen tragen, gegenüber den entsprechend unsubstituierten Vinylverbindungen auf Grund intramolekularer und intermolekularer Effekte dieser Gruppen stark beschleunigt ist (Macromolecules, 2008, 9035 - 9043). Cyclische Carbonatverbindungen sind zudem durch Amine vernetzbar.

Zur Herstellung von wasserbasierten Systemen ist eine ausreichende Dispergierbarkeit der Bindemittel in Wasser erforderlich. Man ist dazu übergegangen, die erforderlichen Emulgatoren chemisch in die Kette des Bindemittels einzubauen, um eine molekulare Dispergierbarkeit des Bindemittels zu erreichen.

WO 97/23516 A1 beschreibt eine wässrige, vernetzbare Beschichtungszusammensetzung, umfassend ein Polymersystem, das durch ein Verfahren vernetzbar ist, welches die Reaktion einer cyclischen Carbonatgruppe mit einer Amingruppe umfasst. Die Wasserdispergierbarkeit wird mit Hilfe von Carboxylatgruppen erreicht. Die Amingruppen werden durch Umsetzung von Carboxylatgruppen mit Aziridinen eingeführt. Die cyclischen Carbonatgruppen und die Amingruppen können an dieselbe oder an unterschiedliche Polymerketten gebunden sein. Als Polymersysteme werden Vinyladditionspolymere einschließlich (Meth)acrylatpolymeren sowie Polyurethane genannt.

Die Härtung dieses einkomponentigen Systems erfolgt allerdings bei erhöhten Temperaturen oder über längere Zeiträume bei Raumtemperatur. Aziridine sind in der Regel toxisch und krebserregend. Zudem weisen Carboxylatgruppen in wässriger Lösung erhöhte pH-Werte auf, was sich ungünstig auf die Hydrolysestabilität und damit die Lagerstabilität der wässrigen Dispersionen auswirken kann.

Der vorliegenden Erfindung lag die Aufgabe zu Grunde, zumindest einige der Nachteile des oben genannten Standes der Technik im Wesentlichen zu überwinden. Insbesondere sollte ein wasserbasiertes Vinylcopolymer-Bindemittel ohne NCO -Gruppen und ohne die Verwendung von Aziridinen im Herstellungsverfahren zur Verfügung gestellt werden, das härtbare stabile wässrige Dispersionen mit hohen Feststoffgehalten ergibt. Die Lagerstabilität der wässrigen Dispersionen sollte kommerziellen Anforderungen genügen. Die Dispersionen sollten keine organischen Lösungsmittel oder zusätzliche Emulgatoren erfordern. Das Bindemittel sollte einfach herstellbar und verwendbar sein.

Diese Aufgaben werden mit den Merkmalen der unabhängigen Ansprüche gelöst. Die abhängigen Ansprüche beziehen sich auf bevorzugte Ausführungsformen.

Es wurde überraschend gefunden, dass ein Vinylcopolymer-Bindemittel mit in der Polymerkette eingebauten cyclischen Carbonatgruppen, bei dem die erfindungsgemäßen Emulgatorgruppen ebenfalls in die Polymerkette eingebaut sind, stabile wässrige Dispersionen mit einem Feststoffanteil von bis zu ≥ 30 Gew.-% ergibt.

Gegenstand der vorliegenden Erfindung ist ein wasserdispergierbares, cyclocarbonatfunktionalisiertes Vinylcopolymer-Bindemittel mit Baugruppen, die von i) mindestens einem Vinylmonomer (I) mit mindestens einer cyclischen Carbonatgruppe, ii) mindestens einem Vinylmonomer (II) mit mindestens einer Emulgatorgruppe und iii) gegebenenfalls mindestens einem copolymerisierbaren Vinylmonomer (III), das von den Monomeren (I) und (II) verschieden ist, abgeleitet sind.

Für die Zwecke der vorliegenden Erfindung soll unter "Vinylmonomer" eine ethylenisch ungesättigte Verbindung verstanden werden. "Vinylmonomere" umfassen daher auch Allylmonomere, Acrysäureester und Methacrylsäureester. Die Aussage, dass die Baugruppen von den entsprechenden Monomeren abgeleitet sind, umfasst zwar die Möglichkeit, dass die entsprechenden Monomere copolymerisiert werden, umfasst aber auch die Möglichkeit, dass die entsprechenden Baugruppen erst durch chemische Modifikation im Anschluss an eine Polymerisationsreaktion erhalten werden.

Die cyclische Carbonatgruppe ist insbesondere ein 5- oder 6-gliedriger Ring, vorzugsweise ein 2-Oxo-1,3-dioxolan-Ring.

Als Vinylmonomer (I) wird eine Verbindung der folgenden Formel bevorzugt, nämlich 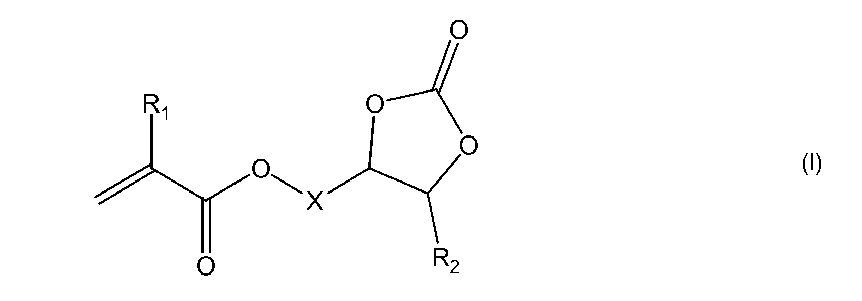 wobei
- R₁ =: H oder CH₃ ist;
- R₂ =: H, Alkyl, Aryl, Aralkyl oder Alkaryl ist, vorzugsweise H, C₁₋₈-Alkyl, C₆₋₁₄-Aryl, C₇₋₂₀-Aralkyl oder-Alkaryl, und insbesondere H ist;
- X =: Alkylen, Arylen, Aralkylen oder Alkarylen ist, welche gegebenenfalls (Poly)- ester-, (Poly)ether-, (Poly)amid-, (Poly)urethan- und/oder (Poly)carbonat- gruppen enthalten, vorzugsweise C₁₋₈-Alkylen, insbesondere Methylen.

Das Vinylmonomer (I) ist demnach einen (Meth)acrylsäureester. Mit der Bezeichnung "(Meth)acrylsäure" wird der Bedingung R₁ = H oder CH₃ Rechnung getragen, d.h. es kann sich sowohl um Acrylsäure als auch um Methacrylsäure handeln. Die Bezeichnung "(Poly)estergruppen" und dergleichen bedeutet, dass sowohl eine als auch mehrere Estergruppen in der Gruppe "X" enthalten sein können. Ein besonders bevorzugter Vertreter des Vinylmonomers (I) ist das Glycerincarbonatacrylat.

Das Vinylmonomer (I) hat vorzugsweise ein Molekulargewicht von 172 (im Falle von Glycerincarbonatacrylat) bis etwa 1.500. Im Rahmen der vorliegenden Erfindung wird Molekulargewichtsangaben die Einheit [g/mol] zu Grunde gelegt, auch wenn dies im Einzelfall nicht ausgeschrieben wird.

Die im Vinylmonomer (II) enthaltene Emulgatorgruppe ist eine nicht-ionische oder eine ionische Gruppe. Das Vinylmonomer (II) hat vorzugsweise ein Molekulargewicht von 88 (in Falle von Ethylenglykolmonovinylether) bis etwa 1.500.

Die Wasserdispergierbarkeit des Vinylcopolymer-Bindemittels kann mit nicht-ionischen Gruppen auf der Basis von Diolen oder (Poly)alkylenglykolen erreicht werden. Unter "Diol" soll hier eine Alkylengruppe verstanden werden, die an beliebigen Positionen insgesamt zwei OH -Gruppen trägt. Demgegenüber wird unter einem "Alkylenglykol" ein vicinales Diol verstanden (vorzugsweise Ethylen- und Propylenglykol, sowie Mischungen davon). Der Ausdruck "(Poly)" soll Monomere, Oligomere und Polymere bezeichnen.

Im Falle der nicht-ionischen Emulgatorgruppe ist das Vinylmonomer (II) demnach aus Vinylethern, Allylethern, Isoprenylethern und (Meth)acrylsäureestern von Diolen, vorzugsweise C₂₋₈-Diolen, oder von (Poly)alkylenglykolen, sowie Mischungen davon, ausgewählt, wobei die endständigen OH -Gruppen jeweils durch C₁₋₈-Alkoxygruppen substituiert sein können und die Diol- und (Poly)alkylenglykolreste jeweils (Poly)estergruppen in der Kette aufweisen können. Beispiele umfassen (Poly)ethylenglykol(meth)acrylate, (Poly)caprolacton(meth)acrylate, 4-Hydroxybytylvinylether, Ethylenglykolvinylether, Methyl(poly)ethylenglykol(meth)acrylate und dergleichen.

Die Wasserdispergierbarkeit des Vinylcopolymer-Bindemittels wird vorzugsweise mit ionischen Gruppen erreicht, wobei die ionische Emulgatorgruppe eine Sulfat-, Sulfonat-, Phosphat- und/oder Phosphonatgruppe umfasst. Die ionische Emulgatorgruppe kann auch eine quaternäre Ammoniumgruppe umfassen.

Beispiele geeigneter Vinylmonomere (II) mit ionischen Gruppen sind u.a. Verbindungen der allgemeinen Formel (IV): 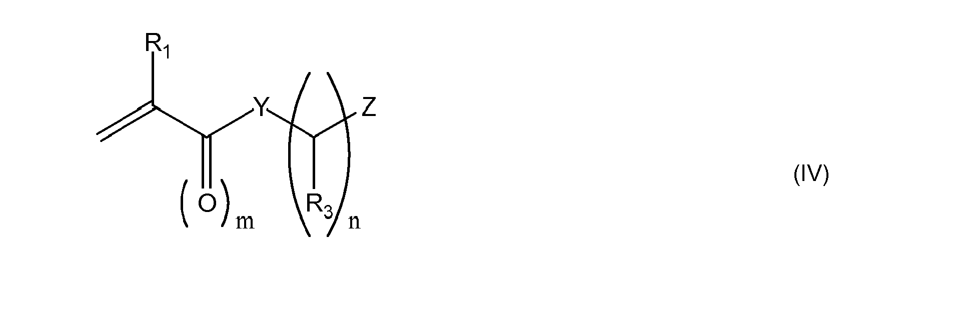 wobei
- R₁: die oben angegebene Beutung aufweist, d.h. H oder CH₃ ist;
- R₃ =: H, Alkyl, Aryl, Aralkyl oder Alkaryl ist, vorzugsweise H, C₁₋₈-Alkyl, C₆₋₁₄-Aryl, C₇₋₂₀-Aralkyl oder -Alkaryl, besonders bevorzugt CH₃ und H, und insbeson- dere H ist;
- Y =: O, CH₂, CH₂O, NH oder CH₂NH ist;
- Z =: OSO₃(-), SO₃(-), OPO₃(2-), OPO₃H(-), PO₃(2-), PO₃H(-) oder N(CH₃)₃(+) ist, insbe- sondere SO₃(-) und N(CH₃)₃(+);
- m =: 0 oder 1 ist; und
- n =: 0 bis 10 ist.

Im Falle der Sulfat-, Sulfonat-, Phosphat- und/oder Phosphonatgruppen kommen als Gegenionen z.B. Alkaliionen, Erdalkaliionen und/oder Ammoniumionen in Frage; im Falle der quaternären Ammoniumgruppe z.B. Halogenidionen. Die quaternäre Ammoniumgruppe kann aber auch selbst das Gegenion zur anionischen Emulgatorgruppe sein, so dass die Emulgatorgruppe auch als zwitterionische Gruppe vorliegen kann, wie in Folgenden ausgeführt wird.

Geeignete Vinylmonomere (II) mit ionischen Gruppen sind u.a. auch die Ralu^{®}MER-Produkte der Fa. Raschig, wie z.B. die (3-Sulfopropyl)(meth)acrylate, die N,N-Dimethyl-N-(2-(meth)acryloyloxyethyl)-N-(3-sulfopropyl)ammoniumbetaine, die Polyethylenglykol-allyl-(3-sulfopropyl)-diether-Salze, die 3-(Meth)acrylamidopropyl-trimethylammoniumhalogenide, die 1-(3-Sulfopropyl)-2-vinylpyridinium- und 1-(3-Sulfopropyl)-4-vinylpyridiniumbetaine, aber auch Vinylphosphonate und Vinylsulfonat, das N,N-Dimethyl-N-(2-(meth)acryloyloxyethyl)-N-(2-sulfoethyl)ammoniumbetain der Fa. BASF SE, sowie die 2-Acrylamido-2-methylpropansulfonsäure (AMPS^{®}) der Fa. Lubrizol.

Im Falle anionischer Emulgatorgruppen kann das Vinylmonomer (II) als Salz oder als freie Säure eingesetzt werden, wobei im Falle der freien Säure anschließend in wässriger Lösung mit einer vorzugsweise stöchiometrischen Menge an Base neutralisiert wird (im Falle von Phosphat- bzw. Phosphonatgruppen vorzugsweise nur bis zur Monohydrogenphosphat- bzw. Monohydrogenphosphonatstufe).

Das copolymerisierbare Vinylmonomer (III) ist aus konjugierten Dienen, Vinylaromaten, Vinylhalogeniden, Vinylestern und Vinylethern, heterocyclischen Vinylverbindungen, (Meth)acrylsäureestern, (Meth)acrylsäure, (Meth)acrylamid, (Meth)acrylnitril, Estern monoethylenisch ungesättigter Dicarbonsäuren, sowie Mischungen davon, ausgewählt, vorzugsweise aus (Meth)acrylsäure-C₁₋₈-alkylester, (Meth)acrylsäure-C₆₋₁₄-arylester, (Meth)acrylsäure-C₇₋₂₀-aralkylester und Styrol. Es hat vorzugsweise ein Molekulargewicht von etwa 50 bis etwa 1.000.

Das erfindungsgemäße Bindemittel hat zweckmäßig ein mittleres Molekulargewicht (Mₙ) von 260 bis 2.000.000, vorzugsweise von 2.000 bis 1.000.000 und insbesondere von 5.000 bis 500.000.

Das erfindungsgemäße Bindemittel ist bevorzugt ein statistisches Copolymer. Die prozentuale Zusammensetzung des Bindemittels aus den einzelnen Baugruppen kann in weiten Grenzen variiert werden, wobei das Bindemittelmolekül im Durchschnitt natürlich mindestens eine von Monomer (I) und eine von Monomer (II) abgeleitete Baugruppe enthält. Es umfasst vorzugsweise 3 bis 96 Mol-% Baugruppen, die von Monomer (I) abgeleitet sind, 3 bis 96 Mol-% Baugruppen, die von Monomer (II) abgeleitet sind, und 0 bis 96 Mol-% Baugruppen, die von Monomer (III) abgeleitet sind.

Im Wesentlichen liegen im erfindungsgemäßen Bindemittel keine Carboxylatgruppen vor, vorzugsweise nicht mehr als 5 Mol-%, besonders bevorzugt nicht mehr als 1 Mol-% und insbesondere nicht mehr als 0,5 Mol-% Carboxylatgruppen.

Des Weiteren enthalten die Monomere (II) und (III) im Wesentlichen keine mit cyclischen Carbonatgruppen reaktiven Gruppen, vorzugsweise nicht mehr als 5 Mol-% und insbesondere nicht mehr als 1 Mol-% reaktive Gruppen.

Ein weiterer Gegenstand der vorliegenden Erfindung ist ein Verfahren zur Herstellung des erfindungsgemäßen Bindemittels. Ein erfindungsgemäß bevorzugtes Verfahren beruht darauf, dass die Monomere (I), (II) und gegebenenfalls (III) radikalisch copolymerisiert werden. Hierzu wird eine Mischung der Monomere, gegebenenfalls zusammen mit einem radikalischen Initiator, in ein siedendes Lösungsmittel getropft, worauf das Lösungsmittel abdestilliert wird, das erhaltene Bindemittel in die wässrige Phase überführt und ionisierbare Emulgatorgruppen in die ionische Form überführt werden.

Ein besonderer Vorteil liegt hier in der bereits erwähnten leichten (Co)polymerisierbarkeit von Vinylmonomeren, die cyclische Carbonatgruppen enthalten. Die radikalische Copolymerisation erfolgt bevorzugt in einem sogenannten "Starved-Feed-Reactor". Ein weiterer Gegenstand der vorliegenden Erfindung ist eine wässrige Dispersion, welche mindestens ein erfindungsgemäßes Bindemittel und Wasser umfasst. Es lassen sich wässrige Dispersionen mit einem Feststoffanteil von mindestens 10 Gew.-%, vorzugsweise mindestens 20 Gew.-% und insbesondere mindestens 30 Gew.-% herstellen.

Die Teilchengröße des in Wasser dispergierten Bindemittels liegt in der Größenordnung von ≤ 100 nm. Es wird von einer "Core-Shell"-Struktur der einzelnen Tröpfchen ausgegangen, wobei die ionischen Gruppen und vermutlich auch die cyclischen Carbonatgruppen in den äußeren Bereichen der Tröpfchen angeordnet sind.

Ein wesentlicher Vorteil gegenüber mit Carboxylatgruppen dispergierten Bindemitteln nach dem Stand der Technik liegt darin begründet, dass die erfindungsgemäßen ionischen Emulgatorgruppen wie z.B. Sulfonat- oder Hydrogenphosphonatgruppen weniger alkalisch als Carboxylatgruppen sind. Daher erfolgt in wässriger Dispersion eine langsamere Hydrolyse der cyclischen Carbonatgruppen, was die Lagerfähigkeit dieser Dispersionen begünstigt. So beträgt die Haltbarkeit der 30 Gew.-%igen wässrigen Dispersionen des Bindemittels typischerweise zumindest ein Jahr.

Auf Grund der vollständigeren Dissoziation und der höheren Ladungsdichte beispielsweise der Sulfonatgruppe ist es möglich, mit weniger Emulgator stabilere Dispersionen zu erhalten, was einen weiteren Vorteil der erfindungsgemäßen Bindemittel darstellt.

Ein weiterer Gegenstand der vorliegenden Erfindung ist ein System, welches zumindest ein erfindungsgemäßes Bindemittel, Wasser und mindestens einen Härter, sowie gegebenenfalls Katalysatoren, Zuschlagsstoffe und/oder Hilfsstoffe umfasst.

Der Härter ist vorzugsweise ein Amin. Auf Grund der hohen Reaktivität der cyclischen Carbonatgruppen mit Amingruppen wird das erfindungsgemäße System zweckmäßig als Zweikomponentensystem formuliert, in welchem die Bindemittelkomponente und Wasser bevorzugt die eine Komponente und der Härter bevorzugt die andere Komponente darstellen.

Das erfindungsgemäße System umfasst also neben der Bindemittelkomponente und Wasser noch vorzugsweise eine Aminkomponente (oder ein Gemisch aus zwei oder mehreren solcher Aminkomponenten), die mindestens eine HNR₃R₄ -Gruppierung aufweist, wobei R₃ und R₄ unabhängig voneinander H, aliphatische, aromatische, aliphatisch-aromatische, cycloaliphatische oder heterocyclische Gruppen sind, vorzugsweise H, C₁₋₈-Alkyl, C₆₋₁₄-Aryl, C₇₋₂₀-Aralkyl oder-Alkaryl oder C₅₋₈-Cycloalkyl, wobei R₃ und R₄ nicht gleichzeitig H sind, und R₃ und R₄ zusammengenommen ein cycloaliphatisches System, vorzugsweise einen 5 - 8-gliedirgen Ring, bilden können.

Das molare Verhältnis der cyclischen Carbonatgruppen zu den HNR₃R₄ -Gruppierungen beträgt zweckmäßig 20:1 bis 0,2:1, bevorzugt 10:1 1 bis 0,4:1, besonders bevorzugt 5:1 bis 0,5:1 und insbesondere 2:1 bis 0,5:1.

Die Aminkomponente kann niedermolekular oder hochmolekular sein. Das mittlere Molekulargewicht (Mₙ) einer niedermolekularen Aminkomponente beträgt zweckmäßig 45 (im Falle von Ethylamin) bis etwa 1.000, insbesondere 60 bis 300. Die Obergrenze des Molekulargewichtes einer hochmolekularen Aminkomponente liegt bei etwa 5.000.000, die Untergrenze bei etwa 1.000. Bevorzugt weist eine hochmolekulare Aminkomponente ein mittleres Molekulargewicht (Mₙ) von 800 bis 2.000.000 auf, insbesondere von 1.000 bis 1.000.000.

Monofunktionelle Amine eignen sich zum Abreagieren überschüssiger cyclischer Carbonatgruppen, während sich di- oder polyfunktionelle Amine zum Vernetzen der Bindemittelkomponente eignen. Die Aminkomponente kann sowohl linear als auch verzweigt sein. Das Gerüst der Aminkomponente kann aliphatische, aromatische, aliphatisch-aromatische, cycloaliphatische und heterocyclische Strukturen enthalten. Die Aminfunktion selbst ist aliphatisch, d.h. der Aminstickstoff ist nicht Teil eines aromatischen Rings.

Als monofunktionelle Amine werden niedermolekulare primäre und sekundäre Alkylamine, Arylamine, Aralkylamine, Alkarylamine und Cycloalkylamine bevorzugt.

Als difunktionelle Amine werden Alkylendiamine und/oder Cycloalkylendiamine bevorzugt, wie z.B. Diaminoethan, Diaminopropan, Diaminobutan, Diaminopentan, Diaminohexan, Diaminocyclopentan, Diaminocyclohexan, Diaminocycloheptan, Isophorondiamin und dergleichen. Isophorondiamin weist den zusätzlichen Vorteil der unterschiedlichen Reaktivitäten der beiden Amingruppen auf, was für eine Verlängerung der Topfzeiten ausgenutzt werden kann.

Als polyfunktionelle Amine werden aminfunktionalisierte Polyalkylenglykole bevorzugt, wie z.B. die Jeffamine^{®} der Fa. Huntsman Corp., z.B. die Jeffamine D-230, D-400, D-2000, D-4000, T-403, T-3000, T-5000, ED-600, ED-2003, oder Amine der allgemeinen Formel H₂N-(CH₂CH₂-NH)ₒ-CH₂CH₂-NH₂ mit o = 1 bis 10 wie z.B. Diethylentriamin. Als hochmolekulare Aminkomponente werden Polymere bevorzugt, die ausgewählt sind aus Polyaminen, dendritischen Polyaminen, Polyiminen (wie z.B. den Polyethyleniminen des Typs Lupasol^{®} der Firma BASF SE), Polyamiden, Polyaminoamiden, Polyurethanen, Polyvinylaminen oder Mischungen davon.

Es stellt einen besonderen Vorteil dar, dass im erfindungsgemäßen System kein organisches (Co-)Lösungsmittel bzw. "Coalescent" benötigt wird. Das erfindungsgemäße System kann ausschließlich auf Wasserbasis formuliert werden, wobei geringe Mengen eines kompatiblen inerten Lösungsmittels sicher nicht stören würden, im Hinblick auf gesundheitliche Aspekte, die Umwelt und die Arbeitsplatzsicherheit aber vermieden werden sollten. Aus diesem Grunde ist die Aminkomponente vorzugsweise flüssig und/ oder hinreichend wasserlöslich, damit auf den Einsatz organischer Lösungsmittel verzichtet und dennoch eine einfache Vermischbarkeit der Komponenten erreicht werden kann.

In einer besonderen Ausführungsform umfasst das erfindungsgemäße System einen Katalysator zur Beschleunigung der Reaktion der cyclischen Carbonatgruppen mit den Amingruppen. Hierbei handelt es sich zweckmäßig um eine katalytisch wirksame Menge einer Base, wie z.B. eines Alkalihydroxids. Der Katalysator kann in der Dispersion der Bindemittelkomponente oder in der Aminkomponente enthalten sein.

Das erfindungsgemäße System umfasst gegebenenfalls noch an sich bekannte Zuschlagstoffe und/oder Hilfsstoffe. Diese können in der Dispersion der Bindemittelkomponente oder in der Aminkomponente enthalten sein oder auch erst nach dem Vermischen der beiden Komponenten zugegeben werden. Als Zuschlagsstoffe werden zweckmäßig Salze wie z.B. Magnesiumchlorid, Calciumchlorid, Calciumsulfat, Bariumsulfat; Anhydrit, Gips, Kreide; Oxide wie z.B. Siliciumdioxid, Aluminiumoxid; Hydroxide wie z.B. Magnesiumhydroxid, Aluminiumhydroxid; Farbpigmente wie z.B. Titandioxid, Eisenoxid; Kohlenstoff wie z.B. Ruß, Graphit, Blähgraphit; Metallpigmente wie z.B. Aluminium; wasseraufnehmende Füllstoffe wie z.B. Zement; Alumosilikate wie z.B. Talk, Kaolin und dergleichen eingesetzt. Als Hilfsstoffe können die üblichen Weichmacher, Stabilisatoren, UV-Absorber, Antioxidationsmittel, Entschäumungsmittel, Benetzungsadditive und dergleichen eingesetzt werden.

Ein weiterer Gegenstand der vorliegenden Erfindung ist die Verwendung des erfindungsgemäßen Bindemittels zur Herstellung einer gehärteten Beschichtung, insbesondere zum Einsatz als wässriger Klebstoff, Dekorbeschichtung, Innen- bzw. Außenraumbeschichtung, Bodenbeschichtung, Korrosionsschutz, "Topcoats", "Basecoats", auch in dicken Schichten.

Die Härtung des Systems erfolgt nach der Vermischung der Komponenten durch die Reaktion der Amingruppen mit den cyclischen Carbonatgruppen. Die Topfzeit liegt in der Größenordnung von einigen Minuten bis mehreren Stunden, vorzugsweise im Bereich von etwa einer halben Stunde bis etwa einer Stunde. Die Härtung erfolgt bei 0 °C bis 50 °C, vorzugsweise bei 10 °C bis 40 °C und insbesondere bei Raumtemperatur. Das System ist vorzugsweise bereits nach einer halben Stunde aufgetrocknet und nach spätestens 24 Stunden blockfest ausgehärtet.

Die vorliegende Erfindung wird nun anhand der folgenden Beispiele näher erläutert:

### Beispiele

### Herstellungsbeispiel 1

7,0 g Benzylmethacrylat, 1,0 g Glycerincarbonatacrylat, 2,0 g 3-Acrylamidopropyltrimethylamoniumchlorid (Emulgator), 1,0 g Dibenzoylperoxid (Initiator) und 15 ml Methoxypropanol wurden gemischt und gerührt, bis eine homogene Mischung entstand. In einem 250 ml Kolben wurden 30 ml Methoxypropanol am Rückfluss gekocht. Dazu wurde die homogene Mischung mit der Geschwindigkeit 10 ml/h zugetropft. Anschließend wurde noch 15 Minuten am Rückfluss gekocht. Danach wurde das Methoxypropanol abdestilliert. Das entstandene Polymer wurde in 40 ml Aceton gelöst. Zu dieser Lösung wurden 20 ml Wasser zugegeben. Von dieser Mischung wurde das Aceton abdestilliert. Die so entstandene wässrige Dispersion wies einen Feststoffanteil von 30 Gew.-% auf.

### Herstellungsbeispiel 2

4,0 g Benzylmethacrylat, 3,0 g Methylmethacrylat, 1,0 g Glycerincarbonatacrylat, 2,0 g 3-Acrylamidopropyltrimethylamoniumchlorid (Emulgator), 1,0 g Dibenzoylperoxid (Initiator) und 15 ml Methoxypropanol wurden gemischt und gerührt, bis eine homogene Mischung entstand. In einem 250 ml Kolben wurden 30 ml Methoxypropanol am Rückfluss gekocht. Dazu wurde die homogene Mischung mit der Geschwindigkeit 10 ml/h zugetropft. Anschließend wurde noch 15 Minuten am Rückfluss gekocht. Danach wurde das Methoxypropanol abdestilliert. Das entstandene Polymer wurde in 40 ml Aceton gelöst. Zu dieser Lösung wurden 20 ml Wasser zugegeben. Von dieser Mischung wurde das Aceton abdestilliert. Die so entstandene wässrige Dispersion wies einen Feststoffanteil von 30 Gew.-% auf.

### Herstellungsbeispiel 3

3,0 g Benzylmethacrylat, 3,0 g Methylmethacrylat, 1,0 g Acrylsäure, 1,0 g Glycerincarbonatacrylat, 2,0 g 3-Acrylamidopropyltrimethylamoniumchlorid (Emulgator), 1,0 g Dibenzoylperoxid (Initiator) und 15 ml Methoxypropanol wurden gemischt und gerührt, bis eine homogene Mischung entstand. In einem 250 ml Kolben wurden 30 ml Methoxypropanol am Rückfluss gekocht. Dazu wurde die homogene Mischung mit der Geschwindigkeit 10 ml/h zugetropft. Anschließend wurde noch 15 Minuten am Rückfluss gekocht. Danach wurde das Methoxypropanol abdestilliert. Das entstandene Polymer wurde in 40 ml Aceton gelöst. Zu dieser Lösung wurden 20 ml Wasser zugegeben. Von dieser Mischung wurde das Aceton abdestilliert. Die so entstandene wässrige Dispersion wies einen Feststoffanteil von 30 Gew.-% auf.

### Herstellungsbeispiel 4

3,0 g Benzylmethacrylat, 3,0 g Methylmethacrylat, 2,0 g Glycerincarbonatacrylat, 2,0 g 3-Acrylamidopropyltrimethylamoniumchlorid (Emulgator), 1,0 g Dibenzoylperoxid (Initiator) und 15 ml Methoxypropanol wurden gemischt und gerührt, bis eine homogene Mischung entstand. In einem 250 ml Kolben wurden 30 ml Methoxypropanol am Rückfluss gekocht. Dazu wurde die homogene Mischung mit der Geschwindigkeit 10 ml/h zugetropft. Anschließend wurde noch 15 Minuten am Rückfluss gekocht. Danach wurde das Methoxypropanol abdestilliert. Das entstandene Polymer wurde in 40 ml Aceton gelöst. Zu dieser Lösung wurden 20 ml Wasser zugegeben. Von dieser Mischung wurde das Aceton abdestilliert. Die so entstandene wässrige Dispersion wies einen Feststoffanteil von 30 Gew.-% auf.

### Herstellungsbeispiele 5-6

Die Herstellungsbeispiele 2 und 3 wurden mit im Wesentlichen gleichen Ergebnissen wiederholt, wobei (3-Sulfopropyl)-acrylat-Kaliumsalz (Ralu^{®}MER SPA) als Emulgatorkomponente verwendet wurde.

### Herstellungsbeispiel 7

Das Herstellungsbeispiel 4 wurde mit im Wesentlichen gleichen Ergebnissen wiederholt, wobei (3-Sulfopropyl)-methacrylat-Kaliumsalz (Ralu^{®}MER SPM) als Emulgatorkomponente verwendet wurde.

### Anwendungsbeispiel 1

Zu 100 g der 30 Gew.-%igen Bindemitteldispersion nach Herstellungsbeispiel 1 wurden 0,25 g eines Silikonentschäumers (BYK-028 der Fa. Byk-Chemie GmbH), 0,5 g eines Benetzungsadditivs auf Silikonbasis (BYK-333 der Fa. Byk-Chemie GmbH) und 0,1 g eines Antioxidationsmittels (handelsübliches Butylhydroxytoluol (BHT)) gegeben und gerührt. Zu dieser Mischung wurden 5 g Isophorondiamin in 5 g Wasser gegeben und 3 Minuten bei 300 U/min gerührt. Die Mischung wurde als 100 µm dicke Schicht auf einer Polyethylenfolie bei Raumtemperatur aushärten gelassen. Nach 24 h wurde eine trockene, klare, klebe- und blockfreie Schicht erhalten.

### Anwendungsbeispiel 2

Zu 100 g der 30 Gew.-%igen Bindemitteldispersion nach Herstellungsbeispiel 2 wurden 0,25 g eines Silikonentschäumers (BYK-028 der Fa. Byk-Chemie GmbH), 0,5 g eines Benetzungsadditivs auf Silikonbasis (BYK-333 der Fa. Byk-Chemie GmbH) und 0,1 g eines Antioxidationsmittels (handelsübliches Butylhydroxytoluol (BHT)) gegeben und gerührt. Zu dieser Mischung wurden 2 g Diethylentriamin und 3 g Jeffamin D-148 in 5 g Wasser gegeben und 3 Minuten bei 300 U/min gerührt. Die Mischung wurde als 100 µm dicke Schicht auf einer Polyethylenfolie bei Raumtemperatur aushärten gelassen. Nach 24 h wurde eine trockene, klare, klebe- und blockfreie Schicht erhalten.

### Anwendungsbeispiel 3

Zu 100 g der 30 Gew.-%igen Bindemitteldispersion nach Herstellungsbeispiel 1 wurden 0,25 g eines Silikonentschäumers (BYK-028 der Fa. Byk-Chemie GmbH), 0,5 g eines Benetzungsadditivs auf Silikonbasis (BYK-333 der Fa. Byk-Chemie GmbH) und 0,1 g eines Antioxidationsmittels (handelsübliches Butylhydroxytoluol (BHT)) gegeben und gerührt. Zu dieser Mischung wurden 2 g Diethylentriamin und 3 g Isophorondiamin in 5 g Wasser gegeben und 3 Minuten bei 300 U/min gerührt. Die Mischung wurde als 100 µm dicke Schicht auf einer Polyethylenfolie bei Raumtemperatur aushärten gelassen. Nach 24 h wurde eine trockene, klare, klebe- und blockfreie Schicht erhalten.

## Patentansprüche

1. Wasserdispergierbares, cyclocarbonatfunktionalisiertes Vinylcopolymer-Bindemittel mit von
i) mindestens einem Vinylmonomer (I) mit mindestens einer cyclischen Carbonatgruppe,
ii) mindestens einem Vinylmonomer (II) mit mindestens einer Emulgatorgruppe und
iii) gegebenenfalls mindestens einem copolymerisierbaren Vinylmonomer (III), das von den Monomeren (I) und (II) verschieden ist,
abgeleiteten Baugruppen.

2. Bindemittel nach Anspruch 1, **dadurch gekennzeichnet, dass** die cyclische Carbonatgruppe ein 5- oder 6-gliedriger Ring ist, vorzugsweise ein 2-Oxo-1,3-dioxolan-Ring.

3. Bindemittel nach Anspruch 1 oder 2, **dadurch gekennzeichnet, dass** das Monomer (I) 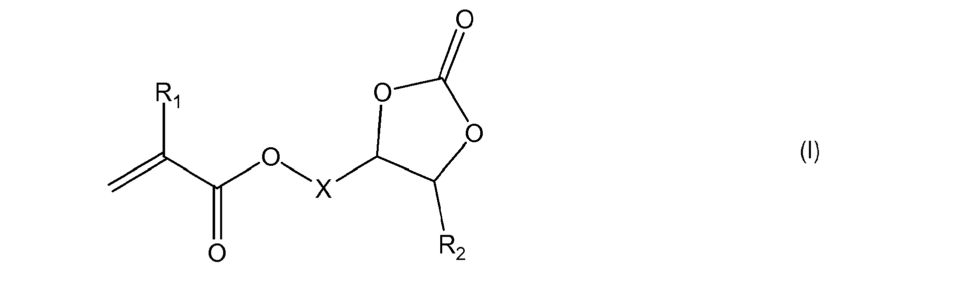 ist, wobei
R₁ = H oder CH₃ ist;
R₂ = H, Alkyl, Aryl, Aralkyl oder Alkaryl ist, vorzugsweise H, C₁₋₈-Alkyl, C₆₋₁₄-Aryl, C₇₋₂₀-Aralkyl oder-Alkaryl, und insbesondere H ist;
X = Alkylen, Arylen, Aralkylen oder Alkarylen ist, welche gegebenenfalls (Poly)- ester-, (Poly)ether-, (Poly)amid-, (Poly)urethan- und/oder (Poly)carbonat- gruppen enthalten, vorzugsweise C₁₋₈-Alkylen, insbesondere Methylen.

4. Bindemittel nach Anspruch 3, **dadurch gekennzeichnet, dass** das Monomer (I) ein Molekulargewicht von 172 bis 1.500 aufweist.

5. Bindemittel nach einem der Ansprüche 1 - 4, **dadurch gekennzeichnet, dass** die Emulgatorgruppe eine nicht-ionische oder eine ionische Gruppe ist und das Monomer (II) ein Molekulargewicht von 88 bis 1.500 aufweist.

6. Bindemittel nach Anspruch 5, **dadurch gekennzeichnet, dass** das Monomer (II) im Falle einer nicht-ionischen Emulgatorgruppe aus Vinylethern, Allylethern, Isoprenylethern und (Meth)acrylsäureestern von Diolen, vorzugsweise C₂₋₈-Diolen, oder von (Poly)alkylenglykolen, sowie Mischungen davon, ausgewählt ist, wobei die endständigen OH -Gruppen jeweils durch C₁₋₈-Alkoxygruppen substituiert sein können und die Diol- und (Poly)alkylenglykolreste jeweils (Poly)estergruppen in der Kette aufweisen können.

7. Bindemittel nach Anspruch 5, **dadurch gekennzeichnet, dass** die ionische Emulgatorgruppe eine Sulfat-, Sulfonat-, Phosphat- und/oder Phosphonatgruppe umfasst.

8. Bindemittel nach Anspruch 5 oder 7, **dadurch gekennzeichnet, dass** die ionische Emulgatorgruppe eine quaternäre Ammoniumgruppe umfasst.

9. Bindemittel nach einem der Ansprüche 1-8, **dadurch gekennzeichnet, dass** das copolymerisierbare Vinylmonomer (III) aus konjugierten Dienen, Vinylaromaten, Vinylhalogeniden, Vinylestern und Vinylethern, heterocyclischen Vinylverbindungen, (Meth)acrylsäureestern, (Meth)acrylsäure, (Meth)acrylamid, (Meth)acrylnitril, Estern monoethylenisch ungesättigter Dicarbonsäuren, sowie Mischungen davon, ausgewählt ist, vorzugsweise aus (Meth)acrylsäure-C₁₋₈-alkylester, (Meth)-acrylsäure-C₆₋₁₄-arylester, (Meth)acrylsäure-C₇₋₂₀-aralkylester und Styrol.

10. Bindemittel nach Anspruch 9, **dadurch gekennzeichnet, dass** das Monomer (III) ein Molekulargewicht von 42 bis 1.000 aufweist.

11. Bindemittel nach einem der Ansprüche 1 - 10 mit einem mittleren Molekulargewicht (Mₙ) von 260 bis 2.000.000, vorzugsweise von 2.000 bis 1.000.000 und insbesondere von 5.000 bis 500.000.

12. Bindemittel nach einem der Ansprüche 1 - 11 mit
3 bis 96 Mol-% von Monomer (I),
3 bis 96 Mol-% von Monomer (II) und
0 bis 96 Mol-% von Monomer (III)
abgeleiteten Baugruppen.

13. Bindemittel nach einem der Ansprüche 1 - 12, **dadurch gekennzeichnet, dass** im Wesentlichen keine Carboxylatgruppen im Bindemittel vorliegen, vorzugsweise nicht mehr als 5 Mol-% Carboxylatgruppen, besonders bevorzugt nicht mehr als 1 Mol-% und insbesondere nicht mehr als 0,5 Mol-% Carboxylatgruppen.

14. Bindemittel nach einem der Ansprüche 1 - 13, **dadurch gekennzeichnet, dass** die Monomere (II) und (III) im Wesentlichen keine mit cyclischen Carbonatgruppen reaktiven Gruppen enthalten, vorzugsweise nicht mehr als 5 Mol-% und insbesondere nicht mehr als 1 Mol-% reaktive Gruppen.

15. Verfahren zur Herstellung des Bindemittels gemäß der Definition mindestens eines der vorausgehenden Ansprüche, **dadurch gekennzeichnet, dass** die Monomere (I), (II) und gegebenenfalls (III) radikalisch copolymerisiert werden.

16. Verfahren nach Anspruch 15, **dadurch gekennzeichnet, dass** die Polymerisation erfolgt, indem eine Mischung der Monomere, gegebenenfalls zusammen mit einem radikalischen Initiator, in ein siedendes Lösungsmittel getropft wird, worauf das Lösungsmittel abdestilliert wird, das erhaltene Bindemittel in die wässrige Phase überführt und ionisierbare Emulgatorgruppen in die ionische Form überführt werden.

17. Wässrige Dispersion, umfassend mindestens ein Bindemittel gemäß der Definition eines der Ansprüche 1 - 14 und Wasser.

18. Wässrige Dispersion nach Anspruch 17 mit einem Feststoffanteil von mindestens 10 Gew.-%, vorzugsweise mindestens 20 Gew.-% und insbesondere mindestens 30 Gew.-%.

19. System, umfassend mindestens ein Bindemittel gemäß der Definition eines der Ansprüche 1 - 14, Wasser und mindestens einen Härter, sowie gegebenenfalls Katalysatoren, Zuschlagsstoffe und/oder Hilfsstoffe.

20. System nach Anspruch 19, **dadurch gekennzeichnet, dass** es sich um ein Zweikomponentensystem handelt, vorzugsweise mit einer von den anderen Komponenten getrennten Härterkomponente.

21. System nach Anspruch 19 oder 20, **dadurch gekennzeichnet, dass** der Härter ein Amin mit mindestens einer HNR₃R₄ -Gruppierung ist, wobei R₃ und R₄ unabhängig voneinander H, aliphatische, aromatische, aliphatisch -aromatische, cycloaliphatische oder heterocyclische Gruppen sind, vorzugsweise H, C₁₋₈-Alkyl, C₆₋₁₄-Aryl, C₇₋₂₀-Aralkyl oder -Alkaryl oder C₅₋₈-Cycloalkyl, wobei R₃ und R₄ nicht gleichzeitig H sind, und R₃ und R₄ zusammen ein cycloaliphatisches System, vorzugsweise einen 5 - 8-gliedirgen Ring, bilden können.

22. System nach einem der Ansprüchen 19 bis 21, **dadurch gekennzeichnet, dass** das Verhältnis der cyclischen Carbonatgruppen zu den HNR₃R₄ -Gruppierungen 20:1 bis 0,2:1, bevorzugt 10:1 bis 0,4:1, besonders bevorzugt 5:1 bis 0,5:1 und insbesondere 2:1 bis 0,5:1 beträgt.

23. System nach einem der Ansprüchen 19 bis 22, **dadurch gekennzeichnet, dass** das Amin monofunktionell, difunktionell oder polyfunktionell ist und aus Alkylaminen, Arylaminen, Aralkylaminen, Alkarylaminen, Cycloalkylaminen, Alkylendiaminen, Cycloalkylendiaminen, aminofunktionalisierten Polyalkylenglykolen, Polyaminen, Polyiminen, Polyamiden, Polyaminoamiden, Polyurethanen, Polyvinylaminen sowie Mischungen davon ausgewählt ist.

24. System nach einem der Ansprüchen 19 bis 23, **dadurch gekennzeichnet, dass** als Katalysator eine katalytisch wirksame Menge einer Base vorliegt.

25. System nach einem der Ansprüchen 19 bis 24, **dadurch gekennzeichnet, dass** als Zuschlagsstoffe Salze wie z.B. Magnesiumchlorid, Calciumchlorid, Calciumsulfat, Bariumsulfat; Anhydrit, Gips, Kreide; Oxide wie z.B. Siliciumdioxid, Aluminiumoxid; Hydroxide wie z.B. Magnesiumhydroxid, Aluminiumhydroxid; Farbpigmente wie z.B. Titandioxid, Eisenoxid; Kohlenstoff wie z.B. Ruß, Graphit, Blähgraphit; Metallpigmente wie z.B. Aluminium; wasseraufnehmende Füllstoffe wie z.B. Zement; Alumosilikate wie z.B. Talk, Kaolin und dergleichen; und als Hilfsstoffe Weichmacher, Stabilisatoren, UV-Absorber, Antioxidationsmittel, Entschäumungsmittel, Benetzungsadditive und dergleichen eingesetzt werden.

26. Verwendung des Bindemittels gemäß der Definition mindestens eines der Ansprüche 1 - 14 zur Herstellung einer gehärteten Beschichtung.
